# EUROPÄISCHE PATENTSCHRIFT

(11) **EP 2 216 144 B1**
(45) Veröffentlichungstag und Bekanntmachung des Hinweises auf die Patenterteilung: **04.01.2017**
(21) Anmeldenummer: 10001255.8
(22) Anmeldetag: 08.02.2010
(51) Int. Cl.: B25J 9/16

(54) **Verfahren und System zur Kontrolle von Bauteilen und/oder Funktionseinheiten mit einer Prüfvorrichtung**
System and method to check components and/or functional devices with a testing device
Système et procédé pour vérifier des composants et/ou des unités fonctionnelles avec un dispositif de test

(30) Priorität: 06.02.2009 DE 102009007932
(43) Veröffentlichungstag der Anmeldung: 11.08.2010
(73) Patentinhaber: Battenberg, Günther, 35037 Marburg (DE)
(72) Erfinder: Battenberg, Günther, 35037 Marburg (DE)
(74) Vertreter: Grünecker Patent- und Rechtsanwälte PartG mbB

(56) Entgegenhaltungen:
- DE-A1- 10 108 688
- DE-A1-102006 006 246

## Beschreibung

Die Erfindung betrifft ein qualitätsgesteuertes Produktions- und Prüfverfahren gemäß dem Oberbegriff von Anspruch 1.

Komplexe Produkte bestehen meist aus mehreren Komponenten, die in unabhängigen Produktionsschritten arbeitsteilig vorgefertigt und anschließend zu einem fertigen Endprodukt zusammengesetzt werden. Dabei wird jede Komponente, z.B. ein Bauteil, eine Funktionseinheit u.dgl., zunächst mittels eines CAD-Systems am Computer erstellt und virtuell in eine Raumstruktur eingefügt, beispielsweise in ein Gehäuse, einen Rahmen oder ein anderes komplexes Bauteil. Anschließend werden sämtliche Komponenten anhand der CAD-Daten auf CNC-gesteuerten Maschinen gefertigt und in meist robotergestützten Montagestationen und/oder -straßen montiert. Das fertige Endprodukt wird ausgeliefert und gegebenenfalls in einer übergeordneten Raumstruktur verbaut, z.B. in einem Apparat, einer Maschine oder einem Kraftfahrzeug.

Aufgrund von Fertigungs-, Montage- und/oder sonstigen Toleranzen oder Fehlern, können einzelne Komponenten von Qualitätsmerkmalen abweichen, beispielsweise von geometrischen, optischen, haptischen, akustischen und/oder funktionalen Vorgaben, wodurch das fertige Endprodukt nicht verwendet oder gar unbrauchbar werden kann.

Toleranzen und Fehler können aber auch dazu führen, dass eine Komponente innerhalb der Raumstruktur abweichend von einer Sollposition angeordnet wird, was ebenfalls zu unerwünschten Ergebnissen führt. Derartige Fehler können sich zudem nach Art einer Fehlerfortpflanzung addieren oder gar potenzieren, so dass einzelne Komponenten nicht mehr in die Raumstruktur eingefügt werden können, weil aufgrund sich addierender Toleranzfehler nicht mehr genügend Bauraum zur Verfügung steht.

Doch selbst wenn sich eine Komponente fehlerfrei in eine übergeordnete Raumstruktur einfügt, kann sich diese im Vergleich zu anderen Komponenten als fehlerhaft oder unpassend erweisen, beispielsweise wenn einzelne Bauteile oder Funktionseinheiten fehlerhaft sind oder derart voneinander abweichen, dass es innerhalb des Produkts zu Unstimmigkeiten kommt, sei es in der Optik, in der Größe, in der Haptik oder in der Handhabung.

Um stets einwandfreie Ware an den Kunden ausliefern zu können, ist es bekannt, in der Endprüfung die fertigen Produkte anhand vorgegebener Prüfprotokolle durch speziell ausgebildete Prüfpersonen prüfen und abnehmen zu lassen. Dies ist jedoch insbesondere bei Kraftfahrzeugen sehr zeit- und kostenintensiv, weil meist sehr viele Prüfungen durchgeführt werden müssen. Hinzu kommt, dass eine manuelle Prüfung kaum reproduzierbar ausführbar ist und sehr stark von den persönlichen Eigenschaften und Empfindungen des Prüfers abhängt, weil sich dieser nur schwer davon frei machen kann.

Man hat daher automatisierte Prüfverfahren entwickelt, die mit Hilfe von Robotern die einzelnen Prüf-, Test- und Montageaufgaben abarbeiten. Ein in EP 1 202 041 A1 offenbartes Verfahren prüft beispielsweise die elektrischen Systeme eines Kraftfahrzeugs in ihrem eingebauten, betriebsbereiten Zustand, wobei das Kraftfahrzeug während der Prüfung realen Umgebungsbedingungen ausgesetzt wird. DE 10 2006 006 246 A1 schlägt ein Verfahren zur vollautomatischen Endkontrolle von Bauteilen vor, wobei sich der Roboter anhand von Orientierungsdaten selbsttätig zu dem zu prüfenden Bauteil oder zu dessen Funktionseinheit ausrichtet und anschließend die vorgesehenen Prüfaufgaben selbsttätig abarbeitet und anhand objektiver Kriterien bewertet.

Stellt das Prüfpersonal oder der Roboter einen Fehler oder eine Abweichung von einer Vorgabe fest, wird das betreffende Produkt oder - sofern das Produkt z.B. bereits in einem Kraftfahrzeug verbaut worden ist - das Kraftfahrzeug ausgesondert und meist von Hand nachgearbeitet. Auch dies ist mit einen hohen Zeit- und Kostenaufwand verbunden, insbesondere dann, wenn sich die Schäden oder Mängel an dem fertigen Produkt nicht mehr ohne weiteres beheben lassen. Oft müssen Komponenten oder Funktionseinheiten vollständig ausgebaut und durch neue, fehlerfreie Komponenten bzw. Funktionseinheiten ersetzt werden, was in schlanken Fertigungsprozessen rasch zu Engpässen führen kann.

Sind alle Mängel behoben, muss das Produkt erneut anhand der vorgegebenen Prüfprotokolle kontrolliert werden, wobei letztere unabhängig von den vorgeschalteten Fertigungsverfahren für jedes Produkt bzw. für jede Produktgruppe einzeln erstellt werden müssen. Auch dies wirkt sich ungünstig auf die Herstellkosten aus.

Aus der US 2007/0233445 A1 ist ein Verfahren bekannt, bei dem zum Prüfen eines Produktes bei der Erstellung von dem Produkt zugrundeliegenden CAD-Daten Prüfschritte einprogrammiert werden. Mit diesen CAD-Daten wird unter Berücksichtigung der gewollten konstruktiven Ausgestaltung des Produktes gemäß den CAD-Daten später das reelle Produkt einer Überprüfung unterzogen, um eine Abweichung zwischen der durch die virtuellen CAD-Daten vorgegebenen Konfiguration und der von einer Messsonde ermittelten tatsächlichen Konfiguration zu erhalten.

Ziel der Erfindung ist es, diese und weitere Nachteile des Standes der Technik zu vermeiden und ein Verfahren zu schaffen, welches die Produktions- und Prüfabläufe komplexer Produkte deutlich verbessert und gegebenenfalls notwendige Nacharbeiten auf ein Minimum reduziert. Das Verfahren soll insbesondere eine qualitätsgesteuerte Produktion ermöglichen und die Fähigkeit besitzen, sich notwendigen Änderungen und Aufgaben anzupassen.

Der vorliegenden Erfindung liegt ferner das Problem zugrunde, ein System zur Prüfung von Bauteilen bzw. Funktionseinheiten anzugeben, welches sich zur automatisierten und vorzugsweise ferngesteuerten Prüfung eignet. Dabei hat die vorliegende Erfindung insbesondere die Prüfung von komplexen Erzeugnissen im Blick, die Bauteile und/oder Funktionseinheiten in sich aufnehmen, die gemäß vorgegebener Anordnung in dem komplexen Erzeugnis enthalten und vorgesehen sind, wobei die Erzeugnisse bei üblichem Fertigungsablauf dezentral vorgesehen sind, d. h. nicht an einem vorbestimmten Prüfplatz angeordnet sind.

Im Hinblick auf das verfahrensmäßige Problem wird mit der vorliegenden Erfindung ein Verfahren zur Kontrolle von Bauteilen und/oder deren Funktionseinheit mittels einer Prüfvorrichtung anhand definierter Prüfaufgaben vorgeschlagen. Das Bauteil bzw. die Funktionseinheit sind in an sich bekannter Weise mittels CAD-System erstellt. Gemäß dem aus der US 2007/0233445 A1 bekannten Vorgehen, wird beim Erstellen eines Bauteils und/oder einer Funktionseinheit im CAD-System eine dem Bauteil und/oder der Funktionseinheit zugeordnete Prüfaufgabe definiert. Dieser Prüfaufgabe sind Qualitätsmerkmale zugeordnet.

Bei dem erfindungsgemäßen Verfahren wird indes die Prüfaufgabe in einem virtuellen Funktionsraum definiert. Ein virtueller Funktionsraum ergibt sich dabei aufgrund der CAD-Daten zu dem Bauteil bzw. der Funktionseinheit auch unter Berücksichtigung der Lage und der Raumbedingungen innerhalb des komplexen Erzeugnisses, so dass der Funktionsraum für die Durchführung der Prüfaufgaben von der automatisieren Prüfvorrichtung überstrichen werden kann, ohne dass eine Kollision mit anderen Bauteilen, Funktionseinheiten oder sonstigen Elementen des komplexen Erzeugnisses zu befürchten ist. Gemäß der vorliegenden Erfindung wird aufgrund der die Prüfaufgabe ausführende Prüfvorrichtung ein die Prüfaufgabe enthaltendes Bewegungsprogramm erstellt. Die von diesem Bewegungsprogramm vorgegebene Bewegung der Prüfvorrichtung wird in dem die Prüfaufgabe zugeordneten virtuellen Funktionsraum simuliert. Dabei werden zum Einen die Abläufe der Prüfvorrichtung daraufhin überprüft, ob diese einen energetisch und zeitlich günstigen Einsatz der Prüfvorrichtung vorgeben werden. Des Weiteren wird validiert, inwieweit tatsächlich eine Kollision der Prüfvorrichtung mit benachbarten Bauteilen, Funktionseinheiten oder sonstigen Elementen des komplexen Erzeugnisses bei der tatsächlichen Durchführung der Prüfaufgabe in dem reellen Funktionsraum vermieden wird. Nach Validierung des Bewegungsprogramms, gegebenenfalls nach vorheriger Optimierung desselben, wird die jedem Bauteil und/oder jeder Funktionseinheit zugeordnete Prüfaufgabe von der Prüfvorrichtung in einem reellen Funktionsraum automatisiert durchgeführt.

Damit bietet die vorliegende Erfindung die Möglichkeit, Prüfabläufe in komplexen Erzeugnissen deutlich zu verbessern. Die Simulation bzw. Optimierung des Bewegungsprogramms in einem virtuellen Prüfraum erlaubt eine bestmögliche Strukturierung des Bewegungsprogramms. Darüber hinaus erlaubt die Simulation eine Überprüfung im Hinblick auf die den virtuellen Prüfraum umgebenden Grenzflächen, die durch weitere Bauteile, Funktionseinheiten oder sonstige Elemente des komplexen Erzeugnisses vorgegeben sein können, darauf hin, ob bei der tatsächlichen Durchführung des Bewegungsprogramms keine Kollision zu befürchten ist.

Bei einem Verfahren zur Fertigung, Montage- und/oder Kontrolle von Bauteilen und/oder deren Funktionseinheiten mittels einer Prüfvorrichtung anhand definierter Prüfaufgaben, wobei jedes Bauteil und/oder jede Funktionseinheit mittels eines CAD-Systems erstellt wird, sieht die Erfindung vor, dass beim Erstellen eines Bauteils und/oder einer Funktionseinheit im CAD-System eine dem Bauteil und/oder der Funktionseinheit zugeordnete Prüfaufgabe definiert wird, wobei jede Prüfaufgabe in einem virtuellen Funktionsraum definiert wird, und wobei jeder Prüfaufgabe Qualitätsmerkmale zugeordnet werden, und dass nach und/oder während der Fertigung bzw. der Montage des Bauteils und/oder dessen Funktionseinheit jede dem Bauteil und/oder der Funktionseinheit zugeordnete Prüfaufgabe von der Prüfvorrichtung ausgeführt wird.

Ein solches Verfahren ermöglicht die Realisierung eines intelligenten, flexiblen und qualitätsgesteuerten Produktionssystems mit der Fähigkeit, sich laufenden Änderungen und Aufgaben rasch und präzise anpassen zu können, denn die für die Montage und/oder Endkontrolle der meist komplexen Produkte notwendigen Prüfaufgaben werden nicht erst festgelegt und erstellt, wenn das Produkt fertig produziert und bestimmungsgemäß ausgeliefert worden ist. Jede Prüfaufgabe wird vielmehr bereits während der Planung und der Konstruktion des Bauteils und/oder dessen Funktionseinheit im CAD-System definiert und in einem dem Bauteil, der Funktionseinheit und/oder einer übergeordneten Umgebung zugeordneten virtuellen Funktionsraum vorgegeben. Die Prüfaufgabe kann dabei unmittelbar mittels CAD-System definiert werden. Auch kann die Prüfaufgabe in einem Prüfplaneditor definiert und hierbei der Prüfaufgabe zugeordnete Prüfmerkmalspläne definiert werden, die in einer gesonderten Datei mit den CAD-Daten verknüpft werden.

Mithin ist es möglich, bereits während dem Erstellen einer CAD-Zeichnung Qualitätsmerkmale und -vorgaben, aber auch Analyse- und Bewertungskriterien sowie Messparameter oder Störgrößen, die bei der Montage und/oder der Prüfung auftreten können, vorzugeben und/oder zu definieren, damit diese in der Fertigung, der Montage oder der späteren Teileprüfung automatisiert berücksichtigt werden. Ebenso können Montageanweisungen, Prüfroutinen und -abläufe definiert werden, die später während der Produktion des komplexen Produktes ausgeführt und von der Prüfvorrichtung ständig überwacht werden.

Der virtuelle Funktionsraum wird anhand des Bauteils, einer Baugruppe, der Funktionseinheit und/oder an einer übergeordneten Umgebung des Bauteils, der Baugruppe oder der Funktionseinheit definiert. Auf diese Weise kann sich die Prüfvorrichtung unmittelbar an dem Bauteil, an der Funktionseinheit oder innerhalb der definierten Umgebung orientieren.

Eine wichtige Weiterbildung des Verfahrens sieht vor, dass jeder Prüfaufgabe Analyse- oder Bewertungskriterien zugeordnet werden, d.h. es werden nicht nur Qualitätsmerkmale vorgegeben und definiert, sondern auch weitere Einflussgrößen. Insbesondere kann man Erfahrungen und Messergebnisse aus bisherigen Produktions- und/oder Prüfprozessen in die Fertigung bzw. in die Montage mit einfließen lassen, wodurch das System bei jeder neuen Aufgabe lernen kann. Die zu prüfenden Bauteile können je nach Vorgabe und Prüfergebnis in Kategorien eingeteilt werden, z.B. in verschiedene Qualitätsstufen, die dann unterschiedlichen Produktionslinien zugeordnet werden.

Im Hinblick auf eine Durchführung des Verfahrens in komplexen Erzeugnissen wird gemäß einer bevorzugten Weiterbildung des erfindungsgemäßen Verfahrens vorgeschlagen, dass CAD-Datensätze verschiedener Bauteile und/oder Funktionseinheiten innerhalb einer zentralen Datenbank gespeichert werden, in der auch die räumliche Zuordnung der Bauteile und/oder Funktionseinheiten in einer übergeordneten Umgebung, insbesondere in der Umgebung des komplexen Erzeugnisses, referenziert ist. Bei der Simulation der dem virtuellen Funktionsraum zugeordneten Prüfungsaufgabe wird die Beweglichkeit der Prüfvorrichtung innerhalb der übergeordneten Umgebung validiert, so dass das Abfahren des Bewegungsprogramms durch die Prüfvorrichtung zu keiner Kollision mit Teilen der übergeordneten Umgebung führt.

Gemäß einer weiteren bevorzugten Ausgestaltung der vorliegenden Erfindung umfassen die Qualitätsmerkmale geometrische, kinematische, haptische, optische und/oder akustische Eigenschaften. Diese unterschiedlichen Eigenschaften werden bei der Prüfung durch verschiedene, aufeinanderfolgende Prüfaufgaben erfasst. Verschieden sind dabei die Prüfaufgaben insbesondere im Hinblick auf die jeweils zu prüfende Eigenschaft. So kann zunächst eine haptische und danach eine kinematische Eigenschaft geprüft werden. Als kinematische Eigenschaft wird dabei die Reaktion eines Bedienteils, beispielsweise eines Tasters auf eine Betätigungsbewegung verstanden. Damit ist ersichtlich, dass die unterschiedlichen Eigenschaften jeweils unterschiedliche Sensoren zu ihrer Erfassung benötigen. Gemäß der Weiterbildung wird in dem CAD-System, d. h. bei der Erstellung des Bauteils und/oder der Funktionseinheit die Auswahl von den verschiedenen Prüfaufgaben zugeordneten Werkzeugen, Tastelementen, Messvorrichtungen und Sensoren durch die Prüfvorrichtung sowie die Abfolge der verschiedenen Prüfaufgaben definiert.

Weitere bevorzugte Ausgestaltungen der vorliegenden Erfindung sind in den Ansprüchen 2 bis 9 angegeben.

Weitere Vorgaben sind möglich. So können jeder Prüfaufgabe Mess- oder Montageparameter und/oder mögliche Stör- und/oder Fehlergrößen zugeordnet werden. Letztere können z.B. aus Eigenschwingungen der Bauteile oder des Fahrzeugs resultieren, die beim Transport oder bei der Fortbewegung entstehen. Störgrößen können sich aber auch aus Vibrationen eines Förderbandes, aus Umwelteinflüssen wie z.B. Temperaturschwankungen oder Luftfeuchtigkeitsänderungen ergeben. Überdies können auch Fehlerabweichungen berücksichtigt werden, die in vorgebbaren Grenzen toleriert werden. Die Bauteile können mithin rasch sortiert oder ausgesondert werden.

Die Qualitätsmerkmale können geometrische, kinematische, haptische, optische und/oder akustische Eigenschaften umfassen oder aufweisen. Dadurch wird definiert, welchen Qualitätsansprüchen das spätere Bauteil genügen soll, wobei die Einhaltung der vorgegebenen Qualitäts- und Prüfparameter entweder unmittelbar nach der Fertigung oder nach der Montage oder dem Einbau in ein Fahrzeug kontrolliert wird. Von Vorteil hierbei ist, wenn jedem virtuellen Funktionsraum bestimmte Qualitätsmerkmale zugeordnet werden. Dadurch lässt sich das Verfahren stets individuell gestalten und an die jeweiligen Anforderungen des Kunden anpassen.

Von besonderer Bedeutung hierbei ist, dass vor der Produktion eines komplexen Produktes nicht nur Qualitätsvorgaben erstellt, sondern zugleich auch zugehörige Prüfroutinen und -aufgaben definiert werden, die während der eigentlichen Produktion ausgeführt und überwacht werden. Dadurch ist eine qualitätsgesteuerte Produktion realisierbar. Kostensenkende Fabriken und Produktionen zur Wettbewerbssteigerung sind dabei ebenso möglich, wie das Herstellen von kundenorientierten Produkten mit sicherer Funktionalität, hoher Wertigkeit und vorgegebener Qualität. Gleichzeitig können Komponenten bereits im Vorfeld aufeinander abgestimmt werden, indem beispielsweise nur Bauteile oder Komponenten in einer Produktionslinie zugelassen werden, die in Abhängigkeit von anderen Bauteilen oder Komponenten bestimmten Qualitätsmerkmalen genügen. sei es in der Optik, in der Größe, in der Haptik oder in der Handhabung.

Für die Umsetzung der im CAD-System vorgegebenen Prüfaufgaben werden Handlungsweisen, Referenzbahnen und/oder Referenzpunkte für die Prüf- und/oder Montagevorrichtung abgeleitet und dem virtuellen Funktionsraum zugeordnet, wobei sämtliche Parameter und/oder Störgrößen berücksichtigt werden, und wobei jeder Handlungsweise, jeder Referenzbahn und/oder jedem Referenzpunkt die Qualitätsmerkmale der Prüf- und/oder Montageaufgabe zugeordnet werden.

Die einer Handlungsweise, einer Referenzbahn und/oder einem Referenzpunkt zugeordneten Daten werden allesamt in einer Datenbank gespeichert werden, so dass alle vorgesehenen Rechnereinheiten und Computer auf die Daten zugreifen können.

Eine weitere wichtige Ausführungsform der Erfindung sieht vor, dass jede Prüf- und/oder Montageaufgabe vor der Ausführung in einem realen Funktionsraum in dem jeweils zugeordneten virtuellen Funktionsraum simuliert wird. Dadurch lässt sich feststellen, ob auch alle Aufgaben ordnungsgemäß ausgeführt werden können, insbesondere ob das Bauteil wie vorgegeben gefertigt, montiert und/oder getestet werden kann.

Die einer Prüf- und/oder Montagaufgabe zugeordneten Daten werden bevorzugt über ein Leitsystem an die Prüfvorrichtung übermittelt, wobei das Leitsystem sämtliche Steuerungs-und Verwaltungsaufgaben ausführt und wobei jede Prüfaufgabe von dem jeweiligen virtuellen Funktionsraum in einen dem Bauteil, der Funktionseinheit und/oder der übergeordneten Umgebung zugeordneten realen Funktionsraum übertragen wird.

Um Abweichungen zwischen den virtuell berechneten und simulierten Vorgaben und den realen Bedingungen ermitteln und berücksichtigen zu können, werden von der Prüfvorrichtung im realen Funktionsraum erfasste Daten mit den zugeordneten Handlungsweisen, Referenzbahnen und/oder Referenzpunkten im virtuellen Funktionsraum anhand von Soll-Ist-Vergleichen analysiert und bewertet. Dabei ermittelte Abweichungen und/oder Störgrößen werden im realen Funktionsraum korrigiert, ausgeglichen und/oder optimiert, d.h. anhand dieser Daten werden Korrekturen und Änderungen abgeleitet und in der jeweils vorgesehenen Prüfaufgabe sofort umgesetzt.

Der Abgleich zwischen den realen und virtuellen Funktionsräumen erfolgt beispielsweise anhand von Referenzpunkten, markanten Strukturen oder Punktwolken (2DLaser-Triangulation). Es können jedoch auch andere geeignete Methoden oder Verfahren eingesetzt werden.

Sind alle Berechnungen und Simulationen abgeschlossen, wird jede Prüfaufgabe von der jeweils zugeordneten Prüfvorrichtung ausgeführt, wobei die Prüf- und Montageaufgaben jeweils separat von einer Montage- und einer Prüfvorrichtung oder gleichzeitig von einer kombinierten Montage- und Prüfvorrichtung ausgeführt werden können.

Jede Prüfvorrichtung wird an einer stationären oder einer bewegten Fertigungsanlage oder an einem selbstfahrenden Objekt eingesetzt, wobei die Prüfvorrichtung ein stationärer oder mobiler Prüfroboter ist. Ein solcher Roboter lässt sich als adaptive Systemkomponente individuell ausgestalten und mit allen für die jeweilige Aufgabe notwendigen Werkzeugen, Sensoren, Aktoren u.dgl. ausstatten. Ein mobiler Roboter kann zudem flexibel eingesetzt werden und bei Bedarf neben einem Transportband fahren, was sich günstig auf den gesamten Arbeitsablauf auswirkt.

Jeder Prüfroboter bildet bevorzugt ein autarkes System, welches - nach Übernahme aller notwendigen Daten - eigenverantwortlich Fertigungs-, Montage und/oder Prüfaufgaben ausführt. Dabei wird jeder Prüfroboter von dem Leitsystem gesteuert und/oder überwacht. Die von dem Leitsystem vorgegebenen und übermittelten Aufgaben werden sodann in qualitätsgesteuerten Handlungsweisen durchführt, so dass sämtliche Produkte, die den Fertigungs-oder Montageprozess verlassen, stets fehlerfrei sind und den in der Konstruktionsphase definierten Qualitätsvorgaben entsprechen.

Um die Fertigungs-, Montage- und/oder Prüfabläufe flexibel und individuell gestalten zu können, ist erfindungsgemäß vorgesehen, dass jeder Prüfroboter in seinem zugeordneten Funktionsraum anhand von Orientierungsdaten selbsttätig navigiert und sich zu dem zu prüfenden Bauteil und/oder dessen Funktionseinheit selbsttätig ausrichtet und/oder seine Bewegung mit der Bewegung des zu prüfenden Bauteils und/oder dessen Funktionseinheit synchronisiert. Hierbei erweist es sich von Vorteil, wenn nicht nur Qualitätsvorgaben und - parameter bei der Berechnung der zugeordneten Handlungsweisen, Referenzbahnen und/oder Referenzpunkten im virtuellen Funktionsraum berücksichtigt werden, sondern auch bereits vorhandene Erfahrungswerte und/oder im System bekannte oder auftretende Störgrößen.

Jeder Prüfroboter führt reproduzierbar die vorgegebenen Fertigungs- und/oder Montageschritte oder die vorgesehenen Einzelkontrollen durch, wobei die Schritte selbsttätiges Ausrichten und reproduzierbares Durchführen wiederholt werden, bis ein Abbruchkriterium erfüllt und/oder die Montage bzw. die Kontrolle vollständig durchgeführt ist. Die dabei ermittelten Daten werden unmittelbar an das Leitsystem übermittelt und von diesem ausgewertet und gespeichert.

Eine weitere Ausführungsform sieht vor, dass jeder Prüfroboter mit dem zu prüfenden komplexen Produkt kommuniziert, so dass gegebenenfalls Daten oder Informationen aus dem Produkt ausgelesen oder eingespielt werden können, beispielsweise um einen Datenspeicher, einen Bordcomputer oder eine Musikanlage zu testen.

Das erfindungsgemäße Verfahren ermöglicht auf vorteilhafte Weise die Definition und die Umsetzung einer messbaren Produktqualität für die gesamte Wertschöpfungskette, einschließlich deren Überwachung und Bewertung mittels intelligenter, qualitätsgesteuerter, adaptiver Systeme.

Mit dem erfindungsgemäßen Verfahren werden qualitätsgesteuerte Fertigungs- und Prüfschritte frühzeitig konstruktiv definiert, prozessfähig abgeleitet, simuliert und anschließend produktionsnah ausgeführt.

Das gesamte Konzept basiert auf der Definition von Aufgaben in fahrzeugbasierten Funktionsräumen, der Ableitung von qualitätsgesteuerten Handlungsweisen, Referenzbahnen und Referenzpunkten, der Kopplung eine Roboters mit oder an einem Fahrzeug und der Durchführung der Fertigungs-, Montage- und/oder Prüfaufgaben in Echtzeit; es thematisiert und konkretisiert die Intelligente qualitätsgesteuerte adaptive Produktion im Automobilbau mit bevorzugt mobilen Robotern und dem Ziel plug and work.

Vorstehend wurde auf eine Prüfvorrichtung bzw. einen Prüfroboter abgestellt. Es versteht sich von selbst, dass diese automatisiert bewegte Vorrichtung das Prüfergebnis nicht nur bewertet und auswertet, sondern gegebenenfalls automatisiert auch defekte Teile austauschen kann. In diesem Fall wird aus der Prüfvorrichtung bzw. dem Prüfroboter eine Montagevorrichtung bzw. ein Montageroboter. Andererseits kann das erfindungsgemäße Verfahren ohne Weiteres auch an einem bereits vorhandenen Montageplatz, der von einem Roboter bedient wird, umgesetzt werden, sofern an dem Roboter der bzw. die zur Durchführung der Prüfaufgabe notwendigen Sensoren wahlweise bereitgestellt werden können, um das Bauteil bzw. die Funktionseinheit zu prüfen. So ist es beispielsweise vorstellbar, dass das freie Ende eines Roboterarmes neben einem Betätigungswerkzeug für die Montage optische, akustische oder haptische Sensoren trägt. Ein haptischer Sensor, der auch eine geometrische bzw. kinematische Überprüfung eines Bauteils bzw. einer Funktionseinheit erlaubt, ist beispielsweise als ein Kraft-Momenten-Sensor verwirklicht, der vorzugsweise mit der Robotersteuerung kommuniziert, um die von dem Sensor erfassten Signale zur Steuerung des Roboters weiter zu verarbeiten.

Im Hinblick auf den vorrichtungsmäßigen Aspekt der vorliegenden Erfindung wird mit dieser ein System zur Kontrolle von Bauteilen und/oder deren Funktionseinheiten angegeben. Das System hat eine mobile Prüfvorrichtung umfassend eine Antriebseinheit, mit welcher die mobile Prüfvorrichtung vorzugsweise selbst- oder ferngesteuert bewegbar ist. Des Weiteren hat die Prüfvorrichtung wenigstens einen Prüfsensor. Dies kann ein geometrischer, kinematischer, haptischer, optischer und/oder akustischer Sensor sein. Vorzugweise sind mehrere, insbesondere sämtliche dieser Sensoren an der Prüfvorrichtung vorgesehen, um verschiedene Eigenschaften des zu prüfenden Bauteils bzw. deren Funktionseinheit zu prüfen. Die Prüfvorrichtung kann dabei ein Spektrometer und/oder eine Farbkamera umfassen, um insbesondere optische Eigenschaften zu überprüfen. Besagter Kraft-Momenten-Sensor sollte vorgesehen sein, der über eine frei abragende Tastspitze an das zu überprüfende Bauteil bzw. die Funktionseinheit heranfahrbar ist. Zur Betätigung können beispielsweise auch pneumatische Einrichtungen vorgesehen sein, beispielsweise Luftdüsen, mit denen ein Luftstrahl auf das zu prüfende Bauteil bzw. die Funktionseinheit aufstrahlbar ist. Des Weiteren sollte die Prüfvorrichtung Laser-Triangulationssensoren umfassen, um die Prüfvorrichtung mit ihrem Sensorkopf in vorbestimmter Ausrichtung, vorzugsweise orthogonal zu der Oberfläche eines zu überprüfenden Bauteils bzw. deren Funktionseinheit auszurichten. Neben Prüfsensoren können auch Sensoren vorgesehen sein, über welche die Prüfvorrichtung anhand von Referenzpunkten des zu prüfenden Bauteils bzw. deren Funktionseinheit oder der Umgebung derselben die tatsächliche Position innerhalb des Prüfraumes mit der über das CAD-System definierten virtuellen Umgebung abgleichen kann, um eine Justierung der Prüfvorrichtung in dem virtuellen Funktionsraum vorzunehmen, mit dem Ziel, dass die im virtuellen Funktionsraum definierte Position des Sensors der tatsächlichen Position in dem reellen Funktionsraum entspricht. Diese Maßnahme erhöht nicht nur die Prüfgenauigkeit, da Bauteile bzw. deren Funktionseinheit genau in der im CAD-System vorbestimmten Weise beim Prüfen angefahren werden, sondern verbessert auch die Sicherheit der Prüfvorrichtung zur Vermeidung einer Kollision beim Abfahren des Bewegungsprogramms. Die Prüfvorrichtung hat ferner einen diese steuernden Controller zur Steuerung der Prüfvorrichtung zur Durchführung der wenigstens einen Prüfaufgabe in einem reellen, dem Bauelement und/oder der Funktionseinheit zugeordneten Funktionsraum. Dieser Controller kann auf einen das Bewegungsprogramm enthaltenden Speicher zurückgreifen, der als Teil der Prüfvorrichtung, d. h. dezentral an der Prüfvorrichtung vorgesehen ist. Diese Variante eignet sich insbesondere bei komplexen Bewegungsprogrammen. Alternativ oder ergänzend können auch einzelne oder sämtliche Signale für den Controller über eine Schnittstelle der Prüfvorrichtung zugeleitet werden. Die Prüfvorrichtung hat erfindungsgemäß eine drahtlose Schnittstelle zum Empfang von auf den Controller wirkenden Prüfbefehlen. In einer einfachen Ausgestaltung bewirken die Prüfbefehle lediglich den Ablauf eines automatisierten Prüfprogramms, welches in einem dezentralen Speicher der Prüfvorrichtung hinterlegt ist. Über die drahtlose Schnittstelle können indes sämtliche Befehle des Bewegungsprogramms beim Durchführen der Prüfvorrichtung mitgeteilt werden. Die bei der Prüfung erfassten Daten können in diesem Speicher abgelegt werden. Die Daten können ebenso gut über die drahtlose Schnittstelle ausgelesen werden. Das Abspeichern der Daten in dem dezentralen Speicher eignet sich für relativ umfängliche Prüfungen mit umfänglichen Datensätzen zu dem erfassten Verhalten des zu prüfenden Bauteils bzw. deren Funktionseinheit.

Das erfindungsgemäße System, hat des Weiteren Mittel zum Ausrichten der Prüfvorrichtung in dem reellen Funktionsraum. Dabei kann es sich zum Einen um Sensoren handeln, die eine grobe Annährung der mobilen Prüfvorrichtung an das komplexe Erzeugnis, die Funktionseinheit bzw. das Bauteil ermöglichen. Insbesondere optische Sensoren erlauben vorzugsweise eine exakte Ausrichtung und Justierung der Prüfvorrichtung beim Anfahren an das zu prüfende Bauteil, deren Funktionseinheit bzw. das komplexe Erzeugnis und beim Prüfen desselben.

Das erfindungsgemäße System hat des Weiteren ein Leitsystem, welches mit der Schnittstelle kommuniziert, um der Prüfvorrichtung Befehle für das Prüfen mitzuteilen.

Bevorzugte Weiterbildungen des erfindungsgemäßen Systems sind in den Ansprüchen 11 und 12 angegeben.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein zu fertigendes, zu montierendes und/oder zu prüfendes Bauteil;
- Fig. 2: eine Prüfvorrichtung zur Durchführung des erfindungsgemäßen Verfahrens;
- Fig. 3: eine schematische Darstellung einer Datenreduktion;
- Fig. 4: eine schematische Darstellung eines Referenzpunktes und einer Referenzbahn für das Erkennen eines Funktionsraums durch einen Roboter:
- Fig. 5: die Festlegung von Qualitätsvorgaben bzw. -merkmalen und deren Zuordnung in einem Funktionsraum;
- Fig. 6: eine schematische Darstellung der Übermittlung einer berechneten und simulierten Fertigungs-, Montage- und/oder Prüfaufgabe an einen Roboter durch das Leitsystem;
- Fig. 7: einen mobilen Roboter;
- Fig. 8: eine schematische Darstellung des von einem Roboter selbständig berechneten Weges zu einem Fahrzeug;
- Fig. 9: eine schematische Darstellung der Übertragung eines virtuellen Funktionsraumes in einen zugehörigen realen Funktionsraum; und
- Fig. 10: einen Messkopf des mobilen Roboters.

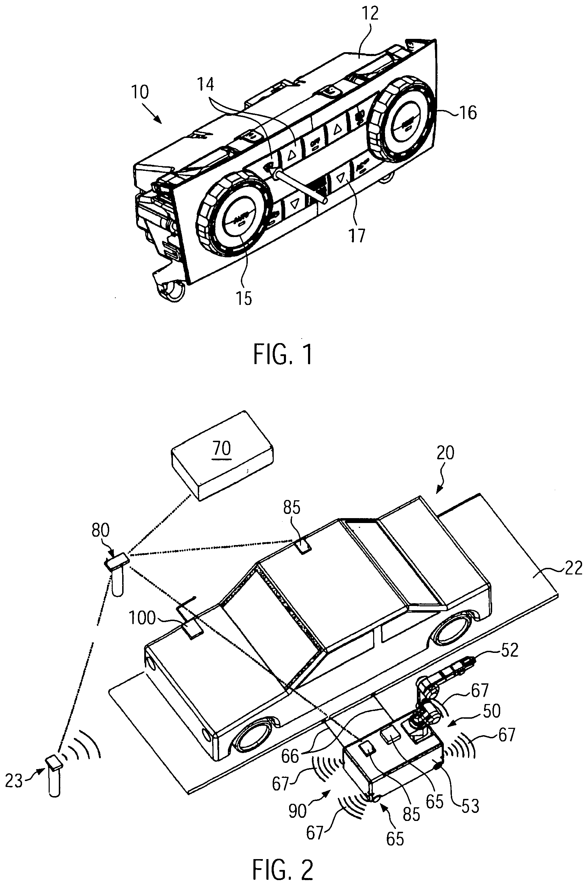

Das in Fig. 1 allgemein mit 10 bezeichnete Bauteil ist für den Einbau in ein Kraftfahrzeug 20 vorgesehen. Es handelt sich um ein Bediengerät für eine Klimaanlage, das neben einem Gehäuse 12 zahlreiche Funktionseinheiten aufweist, insbesondere Taster 14, Drehschalter 15, Drehregler 16, LEDs 17 und ggf. eine LCD-Anzeige.

Für die automatisierte Funktions- und Endkontrolle des in einem Fahrzeug 20 eingebauten Bediengerätes 10 ist - wie Fig. 2 zeigt - eine Prüfvorrichtung 50 vorgesehen. Diese umfasst einen Roboter 52, der mit einem Roboterarm 54 die für die vorgesehenen Prüfaufgaben notwendigen Werkzeuge, Messvorrichtungen 110 und Sensoren aufnehmen kann.

Neben einem Bediengerät 10 für die Klimaanlage werden noch zahlreiche weitere (nicht gezeigte) Bauteile, Objekte und Komponenten in das Fahrzeug 20 eingebaut, z.B. ein Cockpit, Sitze, ein Navigations-Bediengerät, das Fahrgestell, Karosserieteile, Scheinwerfer u.dgl. mehr. Auch diese Objekte und Komponenten werden allesamt mittels der Prüfvorrichtung 50 getestet, damit stets qualitativ hochwertige Endprodukte produziert und an den Kunden ausgeliefert werden.

Das erfindungsgemäße Verfahren stellt sich wie folgt dar:
Jedes Bauteil 10 wird mittels eines (nicht dargestellten) Computers in einem CAD-System konstruiert, wobei die Daten beispielsweise im CATIA-Format zur Verfügung gestellt werden. Man kann die Daten des Bauteils 10 aber auch extern beziehen, z.B. von einem Konstruktionsbüro oder von einem Zulieferbetrieb, der die betreffenden Bauteile herstellt und liefert.

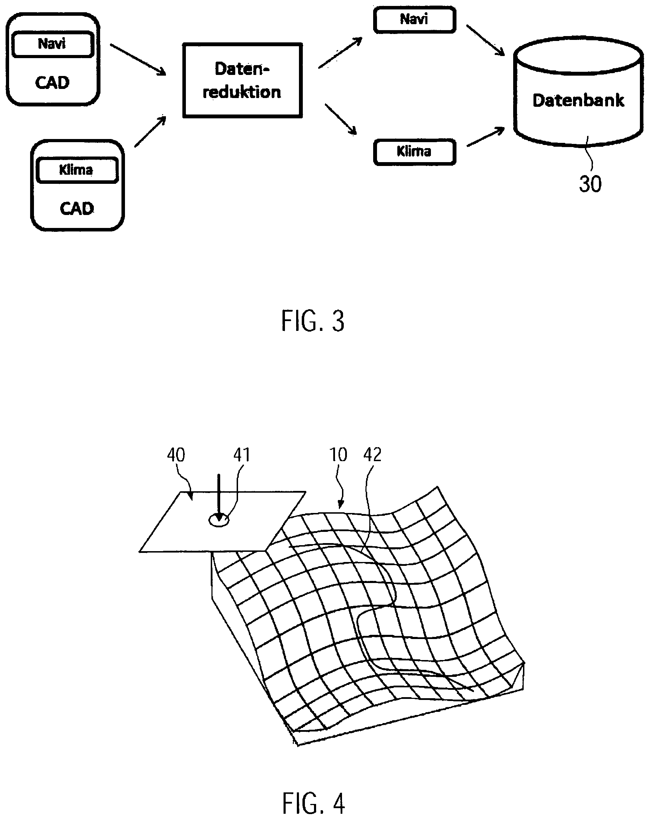

Die CAD-Konstruktionszeichnungen aller Bauteile, Objekte und Komponenten werden - wie in Fig. 3 schematisch dargestellt - einer Datenreduktion unterzogen, um Informationen, die für die Fertigung, die Montage, den Einbau und/oder die Prüfung des jeweiligen Bauteils nicht relevant sind, zu verringern.

Die auf diese Weise gewonnenen 3D-Datensätze aller Bauteile, Objekte und Komponenten werden in einer Objektbibliothek abgelegt, die in einer zentralen Datenbank 30 gespeichert und verwaltet wird.

Jedes Bauteil 10 wird als virtueller Funktionsraum definiert, in dem alle notwendigen und gewünschten Prüfschritte und Aufgaben von dem Roboter 52 ausgeführt werden sollen.

Ein Funktionsraum ist die Menge aller Positionen, Referenzpunkte, Umgebungen und Koordinaten-Systeme des jeweiligen Bauteils 10, auf die sich eine 6D-Transformation bezieht. Der Funktionsraum weist in sich keine Verformung auf, wird also als starr betrachtet. Verschiedene Funktionsräume hingegen können und dürfen sich relativ zueinander bewegen.

Zweckmäßig unterscheidet man zwischen Funktionsräumen im Fahrzeuginnenraum und Funktionsräumen in der äußeren Umgebung des Fahrzeugs. Zu jedem virtuellen Funktionsraum innerhalb des CAD-Systems existiert stets ein realer Funktionsraum am oder im tatsächlichen Bauteil bzw. am oder im Fahrzeug.

Ist der Funktionsraum festgelegt, werden mittels eines Editors, z.B. in Form eines Plugins, Prüfaufgaben und -abläufe erstellt, die der Roboter 52 später im realen Funktionsraum ausführen soll. Ferner werden Qualitätsvorgaben definiert, die das Bauteil 10 und/oder dessen Funktionseinheiten 14, 15, 16, 17 zu erfüllen haben.

Hierzu wird zunächst ein Referenzobjekt 40 definiert, d.h. es werden Punkte 41 oder Pfade 42 für eine Wiedererkennung des Funktionsraumes und damit des zu prüfenden Bauteils 10 in der realen Welt festgelegt (siehe dazu Fig. 4).

Ein Referenzobjekt 40 kann z.B. ein Taster 14 oder ein Drehregler 16 des Bediengerätes 10 im Fahrzeug 20 sein. Dabei setzt sich die Messposition für den Roboter 52 stets aus einem Messpunkt im Koordinatensystem des Funktionsraumes und einem Messvektor zusammen, wobei z.B. der Messvektor die Betätigungsrichtung der Taste 14 bzw. des Drehreglers 16 vorgibt. Man kann aber auch mit einem Sensor oder einem Tastfinger des Roboterarms 54 den Umriss eines Tastenfeldes abfahren, um den Funktionsraum zu erkennen oder um die korrekte Lage des Bauteils 10 zu prüfen. Oder man verwendet als Referenzobjekt 40 die Kontur des Gehäuses 12.

Anhand des Referenzobjektes 40 werden innerhalb des CAD-Systems die gewünschten oder notwendigen Messpositionen- und Bewegungen für den Roboter 52 und dessen Roboterarm 54 festgelegt, d.h. es werden bereits beim Konstruieren des Bauteils 10 im CAD-System konkrete Prüf- und Messaufgaben geplant und definiert, die nach dem Einbau des Bauteils 10 in das Fahrzeug 20 von der Prüfvorrichtung 50 auszuführen sind, wobei sich der Roboter 52 stets innerhalb des durch das Bauteil definierten virtuellen Funktionsraumes bewegt.

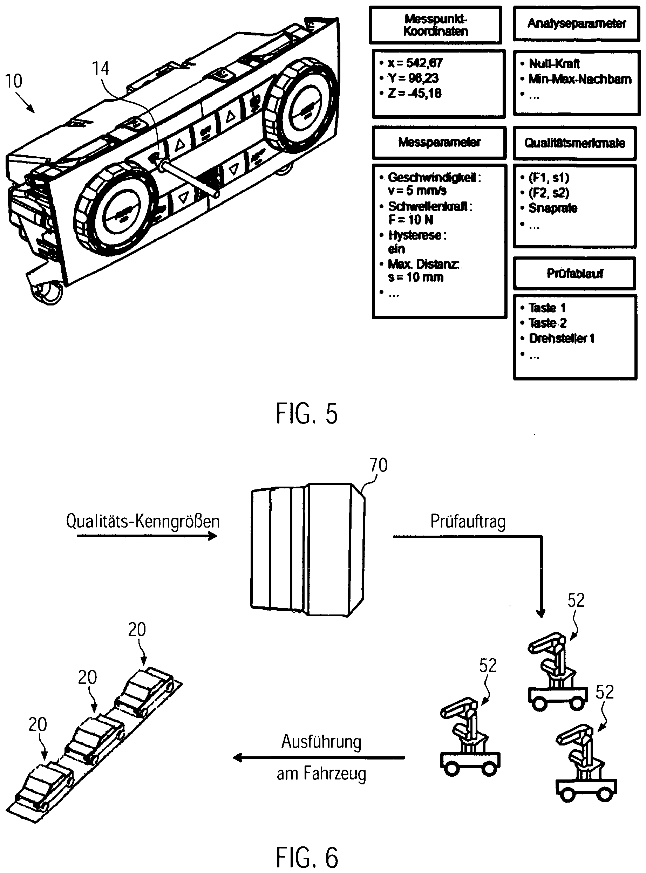

Es werden jedoch nicht nur Messpunkt-Koordinaten oder Pfade festgelegt, sondern auch Messwerte, Parameter und Grenzwerte als Qualitätsvorgaben wie z.B. Geschwindigkeiten, Schwellenkräfte, Hysteresen, Klang- und Farbspektren, Helligkeiten, Lautstärken u.dgl. (siehe dazu Fig. 5). Beispielsweise kann eine maximal zulässige Fehlerquote in Bezug auf die Einbaulage des Bauteils 10 vorgeben werden. Oder es wird eine maximale oder minimale Kraft festgelegt, die beim Drücken einer Taste oder beim Drehen eines Reglers auftreten darf.

Darüber hinaus können auch bereits bekannte oder während der Durchführung des Verfahrens auftretende Störgrößen virtuell definiert und in das System eingebunden werden, um diese später bei der Ausführung des neu definierten Verfahrens im reellen Funktionsraum berücksichtigen zu können. Störgrößen können sich aus dem Produktionsprozess, aus dem Prüfablauf oder aus der Umgebung des Bauteils oder des Fahrzeugs ergeben. Es handelt sich beispielsweise um Vibrationen des Transportbandes, Temperaturschwankungen, Offsets im Fahrzeuginnenraum u.dgl.

Erfüllt das Bauteil 10 die vorgegebenen Qualitätsanforderungen, kann das zugehörige Fahrzeug seinen Weg in der Produktionslinie fortsetzen. Werden die Anforderungen nicht erfüllt, muss das betreffende Bauteil 10 entweder nachgebessert, repariert oder ggf. mitsamt dem Fahrzeug 20 ausgesondert werden.

Insgesamt können die Qualitätsmerkmale geometrische, kinematische, haptische, optische und/oder akustische Eigenschaften umfassen oder aufweisen.

Je nach Bedarf kann ferner noch die Vorgabe bestimmter Werkzeuge, Tastelemente, Messvorrichtungen, Sensoren u.dgl. programmiert werden, die der Roboter 52 für die Durchführung der jeweiligen Prüfaufgabe zu verwenden hat, um die Qualitätsmerkmale erfassen bzw. messen zu können.

Allerdings werden die von dem Konstrukteur erstellten Prüfaufgaben und Qualitätsanforderungen für einzelne Funktionsräume zunächst unabhängig von einem bestimmten Robotertyp vorgenommen. Ebenso spielt die tatsächliche Umgebung, in der die Mess- und Prüfaufgaben ausgeführt werden noch keine Rolle. Dies wird erst in den nachfolgenden Verfahrensschritten berücksichtigt.

Alle die Prüfaufgaben betreffenden Objekte, Daten, Funktionen, Werte und Parameter werden in der zentralen Datenbank 30 abgelegt und verwaltet.

In einem nächsten Schritt wird nun aus den jeweiligen CAD-Daten eines Funktionsraumes mit den darin enthaltenen Prüfaufgaben ein Bewegungsprogramm für den Roboter 52 der Prüfvorrichtung 50 erstellt, damit dieser nach und/oder während der Montage des Bauteils 10 jede definierte und dem Bauteil 10 zugeordnete Prüfaufgabe abarbeiten kann. Die Berechnung erfolgt beispielsweise mittels eines Postprozessors, der aus den Daten des Funktionsraumes, des tatsächlich verwendeten Roboters 52 und der tatsächlichen Umgebung einen Bewegungsablauf plant. Dabei wird die Erreichbarkeit aller Messpunkte durch den Roboter 52 ebenso berücksichtigt wie dessen Abmessungen, um Kollisionen zwischen dem Roboterarm 54 und der Umgebung zu vermeiden.

Anschließend werden die für die vorgesehenen Prüfaufgaben abgeleiteten Roboterbahnen, Bahnkurven und Messpunkte unter Berücksichtigung aller Parameter und Störgrößen am Rechner simuliert und der Tester kann das Fahrzeug mit allen Varianten virtuell aufbauen.

Die bevorzugt dreidimensionale grafische Simulation der erstellten Roboterbahnen dient der Kontrolle des Bewegungsablaufs. Dieser kann daher bei Bedarf noch modifiziert oder angepasst werden. Dies ist insbesondere in der Entwicklungsphase eines Bauteils 10 von großem Vorteil, wenn Simulations- und Postprozessor Hand in Hand arbeiten, zumal sich die Erstellung optimaler Bewegungsabläufe nicht immer vollständig automatisieren lässt, sondern die Einbindung von Expertenwissen erfordert.

Die Prüfung eines kompletten Fahrzeugs 20 umfasst die Prüfung zahlreicher Bauteile 10 und damit zahlreicher Funktionsräume. Dabei erfordert jedes einzelne Fahrzeug, abhängig von seiner Ausstattung, unterschiedliche Kombinationen von Teilabläufen. Die durch die Berechnung des Bewegungsprogramms (Postprocessing) und dessen Simulation erzeugten Teilabläufe werden daher ebenfalls in der Datenbank 30 gespeichert, die mithin alle zu prüfenden Funktionsräume und alle zugehörigen Daten und Teilabläufe enthält.

Sind die Programmierarbeiten abgeschlossen und konnten alle Prüf- und Messaufgaben erfolgreich simuliert werden, kann die Ausführung des Prüf- und Messprogramms im realen Funktionsraum ausgeführt werden. Dazu werden alle erforderlichen Daten aus der Datenbank 30 abgerufen und an ein Leitsystem 70 übermittelt.

Das Leitsystem 70 ist - wie Fig. 2 weiter zeigt - Teil der Prüfvorrichtung 50. Es hat die Aufgabe, den Prüfablauf zu steuern und den Ist-Zustand auf einen Blick zu erkennen. Es kommuniziert daher mit allen Anlagenteilen und verteilt die jeweils vorgesehenen Prüfaufgaben bzw. -aufträge entsprechend den Vorgaben und verfügbaren Ressourcen auf die Roboter 52, die bevorzugt mobil ausgebildet sind und von dem Leitsystem 70 verwaltet werden (siehe dazu Fig. 6).

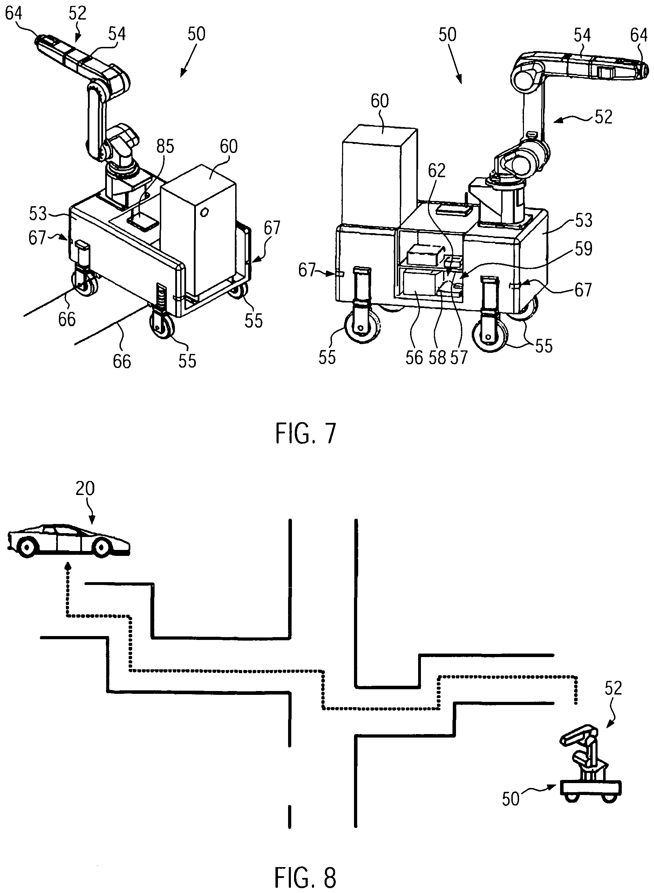

Jeder mobile Roboter 52 hat ein Gehäuse 53 mit Rädern 55, die mit einem (nicht näher bezeichneten) Luftfedersystem ausgerüstet sind. Dazu ist in dem Gehäuse 53 eine Energieversorgung 56, eine Steuerungselektronik 57, ein Kompressor 58 und ein Druckluftspeicher 59 vorgesehen (siehe dazu Fig. 7). Auf der Oberseite des Gehäuses 53 sitzt der Roboterarm 54, der an seinem freien Ende 64 wechselweise ein Werkzeug oder einen Messkopf 110 tragen kann.

Zentraler Bestandteil eines jeden Roboters 52 ist eine Controllereinheit 60, die über eine Steuerelektronik 62 und den Roboterarm 54 die Prüfaufgaben umsetzt und ausführt. Die Elektronik 62 steuert zudem das Luftfedersystem und einen (nicht dargestellten), ebenfalls in dem Gehäuse 53 untergebrachten Antrieb, so dass sich der Roboter 52 selbständig über eine W-LAN-Schnittstelle bewegen kann.

Die gesamte Prüfvorrichtung 50 kommuniziert vorzugweise über Wireless-Technologien. Über dezentrale Access-Points 80 besteht Verbindung mit den mobilen Robotern 52, die zur Orientierung und Steuerung über ein Navigationssystem 65 verfügen, Letzteres umfasst Laserabstandsensoren 66, Radarsensoren 67 und/oder GPS-Bausteine, die mit der Steuerelektronik 62 des Roboters 52 in Verbindung stehen. Der Access-Point 80 ist über W-LAN-Router 85 mit dem Roboter 52 und dem Fahrzeug 20 verbunden.

Fig. 2 zeigt schematisch einen Prüfablauf. Das Fahrzeug 20 wird z.B. auf einem Transportband 22 befördert. Es kann aber auch hängend transportiert oder bereits mittels Eigenantrieb bewegt werden. In das Fahrzeug 20 ist bereits ein Bauteil 10 eingebaut worden, beispielsweise das in Fig. 1 dargestellte Bediengerät für eine Klimaanlage, das nun noch getestet werden soll. Ein Fahrzeugscanner 23 erkennt, dass das Fahrzeug 20 ankommt und um welches Fahrzeug es sich handelt. Diese Information wird über einen Access-Point 80 an das Leitsystem 70 weitergegeben.

Das Leitsystem 70 ruft anhand der empfangenen Daten die zuvor definierten, berechneten, simulierten und in der Datenbank 30 abgelegten Prüfaufgaben für das ankommende Fahrzeug 20 ab und klärt, welcher Roboter 52 für die anstehende Aufgabe zur Verfügung steht. Ist ein Roboter 52 identifiziert, werden die Daten über den Access-Point 80 an die Controllereinheit 60 des Roboters 52 weitergegeben und der Prüfauftrag erteilt.

Sobald das Leitsystem 70 die Prüfaufgaben und die zugehörigen Daten an den Roboter 52 übermittelt und diesen entsprechend der Soll-Vorgaben programmiert hat, orientiert sich der Roboter 52 zunächst im Raum und berechnet anhand der Soll-Vorgaben des Leitsystem 70 seinen Weg zum Fahrzeug 20. Das Navigationssystem 65 und die Steuerelektronik sind dabei derart ausgelegt, dass die Eigenbewegungen des mobilen Roboters 52 - Ort und Lage - erfasst und bei der Wegberechnung berücksichtigt werden.

Sobald das Ziel bestimmt ist, setzt sich der Roboter 52 in Bewegung. Er fährt - wie in Fig. 8 schematisch darstellt - selbständig an das Fahrzeug 20 heran und parallel zu diesem mit, bis seine Bewegungen mit dem Fahrzeug 20 synchronisiert sind. Sodann sucht er einen definierten Zugangspunkt, um mit dem Roboterarm 54 in das Innere des Fahrzeugs eindringen zu können, beispielsweise durch eine geöffnete Fahrzeugscheibe hindurch.

Sind die Zielkoordinaten erreicht, koppelt der Roboter 52 mechanisch an das Fahrzeug 20 an, so dass er mit seinem Messkopf 110 und/oder mit einem Aktoren den Prüfauftrag an dem Bediengerät 10 zuverlässig ausführen kann. Alternativ kann sich der fahrende Roboter auch mit dem Fahrzeug im Trackingverfahren synchronisieren.

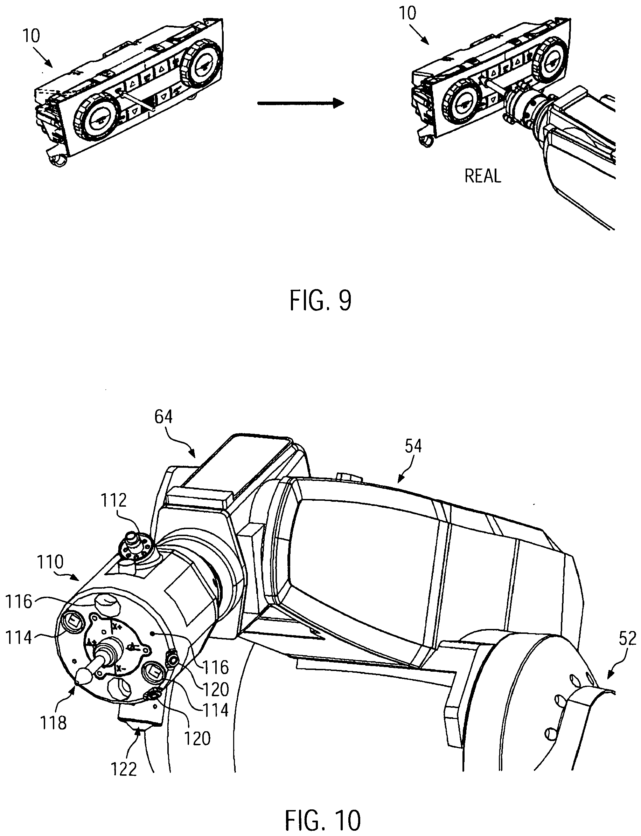

Während der Roboter 52 das Fahrzeug 20 begleitet, wird der zuvor definierte virtuelle Funktionsraum - wie in Fig. 9 schematisch angedeutet - auf den tatsächlich vorhandenen realen Funktionsraum adaptiert, d.h. das reale Bild wird zunächst mit dem virtuellen Bild abgeglichen (Matchen), damit der Roboter 52 die im virtuellen Funktionsraum festgelegten Aufgaben zuverlässig ausführen kann. Anschließend wird die beste Position und/oder Bewegung für den Roboterarm 54 bzw. für die daran befestigten Werkzeuge oder Messvorrichtungen ermittelt (Best Fit). Gegebenenfalls werden die anhand der Qualitätsmerkmale definierten Handlungsweisen, Referenzbahnen und Referenzpunkte angepasst bzw. optimiert. Störgrößen, die durch die Bewegungen des Fahrzeugs 20 verursacht werden, z.B. Schwingungen, sind bereits erfasst und können zuverlässig eliminiert werden.

Sobald der Roboterarm 54 seine Startposition erreicht hat, werden die vorgesehenen Prüfaufgaben von dem Roboter 52 ausgeführt, die Messdaten erfasst und das Leitsystem 70 übermittelt.

Fig. 10 zeigt das freie Ende 64 des Roboterarms 62. Dieser trägt einen mit einer Multisensorik ausgestatteten Messkopf 110, der zahlreiche Messwerte und Parameter erfassen kann. So verfügt der Messkopf 110 beispielsweise über eine Farbkamera 112, Positionssensoren 114, über Sensoren 116 für ein Laser-Triangulations-System, einen Kraft- und Momentensensor 118, pneumatische Düsen 120 sowie ein Spektrometer 122.

Mit dem Messkopf werden die Funktionselemente 14, 15, 16, 17 des Bauteils 10 entsprechend den definierten Prüfaufgaben betätigt, wobei zugleich Weg-, Kraft- und Zeitgrößen in Echtzeit erfasst und an das Leitsystem 70 weitergeleitet werden.

Dabei lokalisiert der Roboter 52 den realen Funktionsraum für die geplante Prüfung völlig eigenständig. Bei Bedarf führt er eine Positionsanpassung (6D-Transformation) sowie eine selbständige Positionierung des Roboterarms 54 durch. Anschließend wird die Prüfaufgabe abgearbeitet.

Während des realen Prüfablaufs erfolgt durch geeignete Sensorik ständig eine Anpassung zwischen realer und virtueller Welt. Dabei werden etwa räumliche Abweichungen der Prüfobjekte von der virtuellen Ideal-Position durch eine dynamische Positionsanpassung kompensiert. Der Abgleich zwischen den realen und den virtuellen Funktionsräumen erfolgt beispielsweise anhand von Referenzpunkten, markanten Strukturen oder Punktwolken (2DLaser-Triangulation). Die Bestimmung der räumlichen Lage des Roboter-Sensor-Koordinatensystems relativ zum Bauteil- Koordinatensystem erfolgt mittels dynamischer Adaption.

Für interne Funktionsräume und eine adaptive Offsetkompensation mit Hilfe eines Mehrachs-Industrie-Roboters wird eine optische 3D-Lagebestimmung verwendet. Die Ausrichtung des Roboterarms 54 bei haptischen Untersuchungen erfolgt bevorzugt mittels eines 2D-Laser-Triangulationssensors.

Eine im Fahrzeug 20 vorgesehene On-Board-Diagnose 100 kann dieses steuern und beispielsweise Funktionen am oder in einem Bauteil 10 aktivieren, auslösen oder erfassen. Beispielsweise kann der Roboter 52 die (nicht näher dargestellte) Außenbeleuchtung des Fahrzeugs 20 testen, indem diese von dem On-Board-Diagnose-System 100 ein- und ausgeschaltet wird, während der Sensor am Roboterarm 54 die Lichtfunktion erfasst. Im Inneren des Fahrzeugs 20 können die Tasten 14 der Klimaanlage 10 oder des Navigationssystems getestet werden. Beispielsweise ob die Stellwege- und Stellkräfte den Vorgaben entsprechen oder ob die dabei entstehenden Geräusche innerhalb definierter Grenzen liegen.

Sind alle Prüfaufgaben erfüllt, koppelt der Roboter 52 von dem Fahrzeug 20 ab und fährt selbständig in seine Ausgangsstellung zurück. Dort wartet er auf den nächsten Auftrag, insbesondere auf das nächste Fahrzeug 20.

Das System ist nicht nur auf die beschriebene Endprüfung von Bauteilen 10 beschränkt. die Roboter 52 können gemäß dem erfindungsgemäßen Verfahren auch dazu verwendet werden, die Bauteile 10 in das Fahrzeug 20 einzubauen. Die hierfür notwendigen Arbeitsschritte, Routinen, Parameter und Störgrößen werden bereits während der Konstruktion des Bauteils im CAD-System definiert. Die daraus resultierenden Arbeitsschritte und Bewegungsabläufe werden anschließend von dem Postprocessor berechnet und simuliert. Auch hierbei wird die Erreichbarkeit aller Messpunkte durch den Roboter 52 ebenso berücksichtigt wie dessen Abmessungen und die Abmessungen des Bauteils und der Umgebung, um Kollisionen zu vermeiden

Sobald das Fahrzeug 20 eine vorbestimmte Position erreicht hat, fährt der Roboter 52 wie in Fig. 8 gezeigt, an das Fahrzeug 20 heran, positioniert sich relativ zu dem Fahrzeug 20 und fährt nach erfolgter Synchronisation mit diesem mit. Sobald der Roboter 52 seine vorgegebene Position erreicht hat, wird das Bauteil 10 an der vorgegebenen Position montiert. Dabei verwendet der Roboter 52 ein geeignetes Werkzeug oder einen Greifer. Anschließend tauscht der Roboter 52 das Werkzeug gegen einen Prüfkopf oder Sensor und führt die vorgegebenen Prüfaufgaben aus.

Das Leitsystem 70 kann mehrere Roboter 52 ansteuern, die gleichzeitig an einem Fahrzeug 20 verschiedene Montage- und Prüfaufgaben ausführen. Die zugehörigen Daten und Informationen erhält das Leitsystem 70 aus der Datenbank 30. So kann z.B. ein erster Roboter das zu montierende Bauteil anliefern und einsetzen, während ein zweiter Roboter mit einem Werkzeug die Befestigung vornimmt. Ein dritter Roboter übernimmt anschließend die Bauteilprüfung. Alle drei Roboter werden dabei von dem Leitsystem 70 gesteuert und überwacht.

Das Verfahren kann auch die Fertigung der Bauteile 10 angewendet werden, indem die vorgesehenen Funktionseinheiten, wie z.B. Taster 14, Drehschalter 15, Drehregler 16 oder LEDs 17 in das Gehäuse 12 eingebaut werden. Sobald ein Teil montiert worden ist, kann es sofort anhand der vorgegebenen Prüfaufgaben getestet und bewertet werden. Entspricht das Bauteil allen Qualitätsvorgaben, kann es ausgeliefert oder weiter verarbeitet werden. Werden bestimmte Kriterien nicht erfüllt, kann das Bauteil ausgesondert oder anderweitig verwendet werden.

Ein wesentlicher Vorteil der Erfindung besteht darin, dass die Prüfaufgaben und die zugeordneten Qualitätsanforderungen bereits während der Konstruktion des jeweiligen Bauteils am Computer definiert und zugeordnet werden. Dabei können für alle Objekte, die zu prüfen sind, die gewünschten Prüfabläufe virtuell erstellt und in den jeweiligen virtuellen Funktionsraum abgebildet werden. Gleichzeitig werden die notwendigen Werkzeuge und Sensoren sowie die Mess- und Analyseparameter festgelegt. Die Berechnung der Bewegungsbahnen (Trajektorien) erfolgt relativ zu einem festgelegten Objektkoordinatensystem. Ferner sind die Prüfvorgaben im virtuellen Funktionsraum im CAD-System derart angelegt, dass der Roboter den realen Funktionsraum später auffinden und die Prüfung durchführen kann.

Damit lässt sich der gesamte Prüfablauf mit allen notwendigen und gewünschten Prüf- und Messschritten im CAD-System definieren.

In der virtuellen Welt erfolgt ferner die Bahnplanung für den Roboterarm 54 auf der Basis gespeicherter Bewegungs- und Prüfabläufe, die in Form eines Baukastensystems dynamisch zusammengestellt werden. Dadurch kann die gesamte Bewegung des Roboters 52 optimiert werden, d.h. dieser kann schnell und zuverlässig arbeiten, ohne dass die Gefahr von Kollisionen oder sonstige Problemen bestehen. Für den räumlichen Abgleich mit der realen Welt werden Referenzflächen und -konturen bestimmt.

Das Verfahren ist jedoch nicht nur auf Prüf- und Messaufgaben beschränkt. Es können vielmehr auch Fertigungs- und Montageschritte geplant und durchgeführt werden, d.h. bereits während der Konstruktion des Bauteils am Computer werden Fertigungs- oder Montageschritte und die zugehörigen Qualitätsmerkmale festgelegt, die anschließend von einem Roboter ausgeführt und anschließend überwacht bzw. kontrolliert werden. Dabei kann sogar ein und derselbe Roboter zum Einsatz kommen.

Die Erstellung der Gesamtheit aller fahrzeugrelevanten Fertigungs-, Montage- und/oder Prüfvorschriften erfolgt ebenfalls mittels des Editors, wobei für sämtliche Fertigungs-, Montage- und Prüfaufgaben alle zugehörigen oder gewünschten Qualitätsmerkmale festgelegt werden.

Sind alle Fertigungs- und Montageaufgaben berechnet und simuliert, übernimmt das Leitsystem 70 die Steuerung und Koordination der Roboter 52, die mit entsprechenden Montagewerkzeugen ausgestattet sind. Das Leitsystem 70 steuert mithin den gesamten Produktions- und Prüfablauf. Es kommuniziert mit allen Anlagenteilen bzw. Systemkomponenten und verteilt die Produktions- und Messaufgaben entsprechend den Vorgaben und verfügbaren Ressourcen.

Produktänderungen und Kapazitätsschwankungen können aufgrund der Flexibilität des Verfahrens und des zugehörigen Prüfsystems unmittelbar berücksichtigt werden, indem einfach die geänderten oder neu vorgegebenen CAD-Daten in das System eingegeben werden. Wechselnde Produktionsaufgaben lassen sich rasch und bequem auf flexible, adaptierbare, qualitätsgesteuerte Anlagen übertragen; hier speziell auf die mobilen Roboter 52, die je nach zuvor programmierter, berechneter und simulierter Aufgabe innerhalb eines vorgegebenen Funktionsraumes sowohl Montage als auch Prüfaufgaben übernehmen können. Sämtliche Roboter 52 werden von dem Leitsystem 70 verwaltet, geortet, und aufgabenspezifisch auf SOLL-Koordinaten programmiert.

Das erfindungsgemäße Verfahren ist auch anwendbar, wenn das Fahrzeug 20 nicht auf einem Transportband angeordnet ist, sondern an einem festen Ort montiert und kontrolliert wird. Dabei ist es auch denkbar, dass die Roboter 52 ebenfalls statisch angeordnet sind. In diesem Fall erfolgt eine rein statische Ankopplung des Roboters 52 an das Fahrzeug 50. Sind beide in Bewegung erfolgt die oben beschriebene dynamische Ankopplung. Dabei kann sich das Fahrzeug auch bereits mit seinem Eigenantrieb bewegen.

Das vorliegende Konzept basiert auf der Definition von konkreten Aufgaben in fahrzeug- oder bauteilbasierten Funktionsräumen unmittelbar im CAD-System. Aus diesen Aufgaben werden qualitätsgesteuerte Handlungsweisen, Referenzbahnen und Referenzpunkte für eine Fertigungs-, Montage- und/oder Prüfvorrichtung abgeleitet, die selbstständig und in Echtzeit an das zu prüfende Fahrzeug ankoppelt und die vorgegebenen Aufgaben durchführt bzw. abarbeitet. Das Konzept thematisiert und konkretisiert mithin die Intelligente qualitätsgestützte adaptive Produktion im Automobilbau mit mobilen Robotern 52. Es ermöglicht die direkte Umsetzung von plug and work.

Das gesamte Verfahren lässt sich auch auf andere Bereiche übertragen, beispielsweise auf die Fertigung von Möbeln, elektronischen Geräten u.dgl.

Weitere Vorteile der Erfindung stellen sich wie folgt dar:
▪ Das Verfahren ermöglicht die Realisierung von intelligenten und flexiblen Produktionssystemen mit der Fähigkeit, sich laufenden Änderungen und Aufgaben anpassen zu können.
▪ Das Verfahren ermöglicht eine qualitätsgesteuerte Produktion, d.h. gefertigte oder montierte Bauteile können sofort anhand bereits vorgegebener, im eigenen Funktionsraum definierter Prüfaufgaben kontrolliert werden. Dadurch wird verhindert, dass fehlerhafte Bauteile überhaupt verbaut werden. Bauteile, die den vorgegebenen Qualitätsanforderungen nur bedingt gerecht werden, können rasch und bequem einer anderen Verwendung, einer Nachbesserung oder einer Aussonderung zugeführt werden.
▪ Das Verfahren definiert eine messbare Produktqualität für die gesamte Wertschöpfungskette und ermöglicht über ein intelligentes qualitätsgesteuertes adaptives Systeme deren Bewertung.
▪ Die im CAD-System während der Konstruktion eines Bauteils festgelegten Prüfaufgaben werden prozessfähig abgeleitet, simuliert und produktionsnah ausgeführt.
▪ Das Verfahren ermöglicht eine permanente Anpassung an neue Baureihen, Kapazitätsänderungen und wechselnde Aufgaben.
▪ Das übergeordnete Leitsystem hat die gesamte Fabrik im Blick, erkennt alle Anlagen und Roboter automatisch, kommuniziert die festgelegten Aufgaben dezentral, steuert und regelt den gesamten Produktionsablauf. Ausgangsbasis hierfür sind digitale Abbildungen des gesamten Produktionsprozesses in der Fabrik anhand der Funktionsräume.
▪ Die autarken Roboter stehen in permanenter Interaktion mit dem Leitsystem, lernen neue Aufgaben mit neuen Werkzeugen, navigieren selbstständig in ihrer Umgebung, lokalisieren ihren Einsatzort, stehen in ständiger Kooperation mit dem Fahrzeug und führen in qualitätsgesteuerten Handlungsweisen, die Prüfaufgaben in Eigenverantwortung durch. Die qualitätsgesteuerten Prüfaufgaben werden aus den CAD-Daten abgeleitet, simuliert, ortsaufgelöst und von den autarken robotergestützten Systemen auf stationären oder mobilen Plattformen ausgeführt.

Die Erfindung betrifft mithin ein Verfahren zur Fertigung, Montage- und/oder Kontrolle von Bauteilen 10 mittels einer Prüfvorrichtung 50 anhand definierter Prüfaufgaben, wobei jedes Bauteil 10 mittels eines CAD-Systems erstellt wird. Erfindungsgemäß ist vorgesehen, dass beim Erstellen eines Bauteils 10 im CAD-System eine dem Bauteil 10 zugeordnete Prüfaufgabe definiert wird, wobei jede Prüf- und/oder Montageaufgabe in einem virtuellen Funktionsraum definiert wird. Ferner können jeder Prüfaufgabe Qualitätsmerkmale sowie Analyse- oder Bewertungskriterien sowie Stör- und Fehlergrößen zugeordnet werden. Aus jeder Prüfaufgabe werden Handlungsweisen, Referenzbahnen und/oder Referenzpunkte für die Prüfvorrichtung 50 abgeleitet und dem virtuellen Funktionsraum zugeordnet. Anschließend wird jede Prüfaufgabe vor der Ausführung in einem realen Funktionsraum in dem jeweils zugeordneten virtuellen Funktionsraum simuliert. Nach einer Adaption des virtuellen Funktionsraums an den realen Funktionsraum werden die vorgegebenen Prüfaufgaben von der Prüfvorrichtung 50 ausgeführt

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Bauteil
- 12: Gehäuse
- 14: Taster
- 15: Drehschalter
- 16: Drehregler
- 17: LED
- 20: Kraftfahrzeug
- 22: Transportband
- 23: Fahrzeugscanner
- 30: Datenbank
- 40: Referenzobjekt
- 41: Punkt
- 42: Pfad
- 50: Prüfvorrichtung
- 52: Roboter
- 53: Gehäuse
- 54: Roboterarm
- 55: Räder
- 56: Energieversorgung
- 57: Steuerungselektronik
- 58: Kompressor
- 59: Druckluftspeicher
- 60: Controllereinheit
- 62: Steuerelektronik
- 64: freies Ende
- 65: Navigationssystem
- 66: Laserabstandssensor
- 67: Radarsensor
- 70: Leitsystem
- 80: Access-Point
- 85: W-LAN-Router
- 90: Tracking-System
- 100: On-Board-Diagnose
- 110: Messkopf
- 112: Farbkamera
- 114: Positionssensoren
- 116: Sensor für Laser-Triangulations-System
- 118: Kraft- und Momentensensor
- 120: pneumatische Düsen
- 122: Sprektrometer

## Patentansprüche

1. Verfahren zur Kontrolle von Bauteilen (10) und/oder Funktionseinheiten (14, 15, 16, 17) mit einer Prüfvorrichtung (50) anhand definierter Prüfaufgaben, wobei jedes Bauteil (10) und/oder jede Funktionseinheit (14, 15, 16, 17) mittels eines CAD-Systems erstellt wird und wobei beim Erstellen eines Bauteils (10) und/oder einer Funktionseinheit (14, 15, 16, 17) im CAD-System eine dem Bauteil (10) und/oder der Funktionseinheit (14, 15, 16, 17) zugeordnete Prüfaufgabe definiert wird, wobei jeder Prüfaufgabe Qualitätsmerkmale zugeordnet sind,
**dadurch gekennzeichnet,**
**dass** die Prüfaufgabe in einem virtuellen Funktionsraum definiert wird,
**dass** aufgrund der Prüfaufgabe für eine die Prüfaufgabe ausführende Prüfvorrichtung (50) ein die Prüfaufgabe enthaltendes Bewegungsprogramm erstellt wird,
**dass** die Bewegung der Prüfvorrichtung (50) in dem der Prüfaufgabe zugeordneten virtuellen Funktionsraum simuliert wird und,
danach die jedem Bauteil (10) und/oder jeder Funktionseinheit (14, 15, 16, 17) zugeordnete Prüfaufgabe von der Prüfvorrichtung (50) in einem realen Funktionsraum automatisiert durchgeführt wird.

2. Verfahren nach Anspruch 1, **dadurch gekennzeichnet, dass** CAD-Datensätze verschiedener Bauteile (10) und/oder Funktionseinheiten (14, 15, 16, 17) in einer zentralen Datenbank gespeichert werden, in der auch die räumliche Zuordnung der Bauteile (10) und/oder Funktionseinheiten (14, 15, 15, 17) in einer übergeordneten Umgebung referenziert ist, und dass die Simulation der dem virtuellen Funktionsraum zugeordneten Prüfaufgabe die Beweglichkeit der Prüfvorrichtung (50) innerhalb der übergeordneten Umgebung validiert.

3. Verfahren nach Anspruch 1 oder 2, **dadurch gekennzeichnet, dass** die Qualitätsmerkmale geometrische, kinematische, haptische, optische und/oder akustische Eigenschaften umfassen und dass unterschiedliche Eigenschaften über aufeinanderfolgende verschiedene Prüfaufgaben erfasst werden und dass in dem CAD-System die Auswahl von den verschiedenen Prüfungsaufgaben zugeordneten Werkzeugen, Tastelementen, Messvorrichtungen und Sensoren durch die Prüfvorrichtung definiert wird.

4. Verfahren nach einem der vorherigen Ansprüche, **dadurch gekennzeichnet, dass** einer Prüfaufgabe mögliche Stör- und/oder Fehlergrößen zugeordnet werden.

5. Verfahren nach einem der vorherigen Ansprüche, **dadurch gekennzeichnet, dass** jeder Prüfaufgabe Handlungsweisen, Referenzbahnen und/oder Referenzpunkte für die Prüfvorrichtung (50) abgeleitet und dem virtuellen Funktionsraum zugeordnet werden,
dass jeder Handlungsweise, jeder Referenzbahn und/oder jedem Referenzpunkt die Qualitätsmerkmale der Prüfaufgabe zugeordnet sind,
dass in einer Handlungsweise, einer Referenzbahn und/oder einem Referenzpunkt zugeordneten Daten in einer Datenbank (30) gespeichert werden, und
dass jede Prüfaufgabe vor Ausführung in einem reellen Funktionsraum in dem jeweils zugeordneten virtuellen Funktionsraum simuliert wird.

6. Verfahren nach einem der vorherigen Ansprüche, **dadurch gekennzeichnet, dass** die einer Prüfaufgabe zugeordneten Daten über ein Leitsystem (70) an die Prüfvorrichtung (50) übermittelt werden.

7. Verfahren nach einem der vorherigen Ansprüche, **dadurch gekennzeichnet, dass** von der Prüfvorrichtung (50) im realen Funktionsraum erfasste Daten mit den zugeordneten Handlungsweisen, Referenzbahnen und/oder Referenzpunkten im virtuellen Funktionsraum anhand von Soll-Ist-Vergleichen im Rahmen der Qualitätsprüfung analysiert und bewertet werden.

8. Verfahren nach einem der vorherigen Ansprüche, **dadurch gekennzeichnet, dass** die von der Prüfvorrichtung (50) im realen Funktionsraum erfassten Daten mit den zugeordneten Daten der ermittelten Handlungsweisen, Referenzbahnen und/oder Referenzpunkten im virtuellen Funktionsraum abgeglichen werden, und dass ermittelte Abweichungen und/oder Störgrößen korrigiert, ausgeglichen und/oder optimiert werden.

9. Verfahren nach einem der vorherigen Ansprüche, **dadurch gekennzeichnet, dass** der Abgleich zwischen den realen und virtuellen Funktionsräumen anhand von Referenzpunkten, markanten Strukturen oder Punktwolken (2DLaser-Trangulation) erfolgt.

10. System, angepasst zur Durchführung des Verfahrens nach einem der Ansprüche 1 bis 9, mit
einer mobilen Prüfvorrichtung umfassend
eine Antriebseinheit, wenigstens einen Prüfsensor, einen die Prüfvorrichtung steuernden Controller (60) zur Steuerung der Prüfvorrichtung (50) zur Durchführung wenigstens einer Prüfaufgabe in einem realen, dem Bauteil (10) und/oder der Funktionseinheit (14, 15, 16, 17) zugeordneten Funktionsraum durch die Prüfvorrichtung (50),
eine drahtlose Schnittstelle (85) zum Empfang von auf den Controller (60) einwirkenden Prüfbefehlen,
mit Mitteln zum Ausrichten der Prüfvorrichtung (50) in dem realen Funktionsraum und mit einem Leitsystem (70), welches mit der Schnittstelle kommuniziert.

11. System nach Anspruch 10, **gekennzeichnet durch** ein Erkennungsmittel (23) zum Erkennen eines zu prüfenden Bauteils (10), einer Funktionseinheit (14, 15, 16, 17) und/oder wenigstens ein Bauteil (10) und/oder eine Funktionseinheit (14, 15, 16, 17) aufnehmenden komplexen Erzeugnisses (20), wobei das Erkennungsmittel (23) mit der Schnittstelle (85) kommuniziert.

12. System nach Anspruch 10 oder 11, **gekennzeichnet durch** ein Korrekturmodul zum Abgleich von den von der Prüfvorrichtung (50) im realen Funktionsraum erfassten Daten mit den zugeordneten Daten der ermittelten Handlungsweisen, Referenzbahnen und/oder Referenzpunkten im virtuellen Funktionsraum und zur dynamischen Anpassung der Position der Prüfvorrichtung (50) in dem realen Funktionsraum.

## Claims

1. Method for testing components (10) and/or functional units (14, 15, 16, 17) with a testing device (50) on the basis of defined test procedures, every component (10) and/or every functional unit (14, 15, 16, 17) being designed by means of a CAD system, and during the process of designing a component (10) and/or a functional unit (14, 15, 16, 17) a test procedure assigned to the component (10) and/or functional unit (14, 15, 16, 17) is defined in the CAD system and quality characteristics are assigned to every test procedure,
**characterised in that**
the test procedure is defined in a virtual functional space, on the basis of the test procedure, a motion programme containing the test procedure is created for a testing device (50) implementing the test procedure,
the motion of the testing device (50) is simulated in the virtual functional space assigned to the test procedure, and the test procedure assigned to every component (10) and/or every functional unit (14, 15, 16, 17) is then run by the testing device (50) in a real functional space on an automated basis.

2. Method as claimed in claim 1, **characterised in that** CAD data sets of different components (10) and/or functional units (14, 15, 16, 17) are stored in a central data bank in which the spatial assignment of the components (10) and/or functional units (14, 15, 16, 17) in a master environment is also specified, and the simulation of the test procedure assigned to the virtual functional space validates the motion of the testing device (50) within the master environment.

3. Method as claimed in claim 1 or 2, **characterised in that** the quality characteristics comprise geometric, kinematic, haptic, optical and/or acoustic properties and different properties are detected by consecutive different test procedures and the selection of tools, probe elements, measuring devices and sensors assigned to the different test procedures is defined by the testing device in the CAD system.

4. Method as claimed in one of the preceding claims, **characterised in that** possible failure and/or error variables are assigned to a test procedure.

5. Method as claimed in one of the preceding claims, **characterised in that** modes of action, reference paths and/or reference points for the testing device (50) are derived from every test procedure and assigned to the virtual functional space,
the quality characteristics of the test procedure are assigned to every mode of action, every reference path and/or every reference point,
assigned data in a mode of action, reference path and/or reference point is stored in a data bank (30), and
every test procedure is simulated in the respectively assigned virtual functional space prior to implementation in a real functional space.

6. Method as claimed in one of the preceding claims, **characterised in that** the data assigned to a test procedure is transmitted to the testing device (50) via a management system (70).

7. Method as claimed in one of the preceding claims, **characterised in that** data detected by the testing device (50) in the real functional space is analysed and evaluated in conjunction with the assigned modes of action, reference paths and/or reference points in the virtual functional space on the basis of desired-actual comparisons as part of the quality test.

8. Method as claimed in one of the preceding claims, **characterised in that** the data detected by the testing device (50) in the real functional space is correlated with the assigned data of the modes of action, reference paths and/or reference points determined in the virtual functional space and any variances and/or failure variables found are corrected, compensated and/or optimised.

9. Method as claimed in one of the preceding claims, **characterised in that** the correlation between the real and virtual functional spaces is implemented on the basis of reference points, distinctive structures or point clouds (2-D laser triangulation).

10. System adapted to implement the method as claimed in one of claims 1 to 9, having
a mobile testing device comprising
a drive unit, at least one test sensor, a controller (60) controlling the testing device in order to control the testing device (50) with a view to implementing at least one test procedure in a real functional space assigned to the component (10) and/or functional unit (14, 15, 16, 17) by the testing device (50),
a wireless interface (85) for receiving test commands acting on the controller (60),
having means for orienting the testing device (50) in the real functional space,
and having a management system (70) which communicates with the interface.

11. System as claimed in claim 10, **characterised by** a detection means (23) for detecting a component (10) to be tested, a functional unit (14, 15, 16, 17) and/or a complex product (20) incorporating at least one component (10) and/or functional unit (14, 15, 16, 17), which detection means (23) communicates with the interface (85).

12. System as claimed in claim 10 or 11, **characterised by** a correction module for correlating data detected by the testing device (50) in the real functional space with the assigned data of the modes of action, reference paths and/or reference points determined in the virtual functional space and for dynamically adapting the position of the testing device (50) in the real functional space.

## Revendications

1. Procédé destiné au contrôle de composants (10) et/ou d'unités fonctionnelles (14, 15, 16, 17) à l'aide d'un dispositif de contrôle (50), au regard de missions de contrôle définies, chaque composant (10) et/ou chaque unité fonctionnelle (14, 15, 16, 17) étant élaboré à l'aide d'un système de CAO, et une mission de contrôle associée au composant (10) et/ou à l'unité fonctionnelle (14, 15, 16, 17) étant définie lors de l'élaboration d'un composant (10) et/ou d'une unité fonctionnelle (14, 15, 16, 17) dans le système de CAO, des caractéristiques de qualité étant associées à chaque mission de contrôle, **caractérisé**
**en ce que** la mission de contrôle est définie dans un espace fonctionnel virtuel,
**en ce que** sur la base de la mission de contrôle est établi un programme de déplacement renfermant la mission de contrôle pour un dispositif de contrôle (50) exécutant la mission de contrôle,
**en ce qu'**une simulation du déplacement du dispositif de contrôle (50) est réalisée dans l'espace fonctionnel virtuel associé à la mission de contrôle, et
ensuite le dispositif de contrôle (50) effectue de manière automatisée, dans un espace fonctionnel réel, la mission de contrôle associée à chaque composant (10) et/ou à chaque unité fonctionnelle (14, 15, 16, 17).

2. Procédé selon la revendication 1, **caractérisé en ce que** des jeux de données de CAO des différents composants (10) et/ou de différentes unités fonctionnelles (14, 15, 16, 17) sont mémorisés dans une banque de données centrale, dans laquelle est également référencée l'association spatiale des composants (10) et/ou des unités fonctionnelles (14, 15, 16, 17) dans un environnement supérieur ultérieur, et **en ce que** la simulation de la mission de contrôle associée à l'espace fonctionnel virtuel valide la mobilité de déplacement du dispositif de contrôle (50) à l'intérieur dudit environnement supérieur ultérieur.

3. Procédé selon la revendication 1 ou la revendication 2, **caractérisé en ce que** les caractéristiques de qualité englobent des propriétés géométriques, cinématiques, haptiques, optiques et/ou acoustiques, et **en ce que** des propriétés différentes sont relevées par différentes missions de contrôle successives, et **en ce que** dans le système de CAO est défini, par le dispositif de contrôle, le choix des outils, des éléments palpeurs, des dispositifs de mesure et des capteurs associés aux différentes missions de contrôle.

4. Procédé selon l'une des revendications précédentes, **caractérisé en ce qu'**à une mission de contrôle sont associées de possibles grandeurs d'erreur et/ou de défaut.

5. Procédé selon l'une des revendications précédentes, **caractérisé en ce que** de chaque mission de contrôle sont dérivés et associés à l'espace fonctionnel virtuel, des modes opératoires, des trajectoires de référence et/ou des points de référence pour le dispositif de contrôle (50),
**en ce qu'**à chaque mode opératoire, à chaque trajectoire de référence et/ou à chaque point de référence sont associées les caractéristiques de qualité de la mission de contrôle,
**en ce que** des données associées à un mode opératoire, à une trajectoire de référence et/ou à un point de référence sont mémorisées dans une banque de données (30), et
**en ce que** chaque mission de contrôle est simulée, avant exécution dans un espace fonctionnel réel, dans l'espace fonctionnel virtuel respectivement associé.

6. Procédé selon l'une des revendications précédentes, **caractérisé en ce que** les données associées à une mission de contrôle sont transmises au dispositif de contrôle (50) par l'intermédiaire d'un système de gestion (70).

7. Procédé selon l'une des revendications précédentes, **caractérisé en ce que** des données relevées par le dispositif de contrôle (50) dans l'espace fonctionnel réel sont analysées et traitées avec les modes opératoires, les trajectoires de référence et/ou les points de référence associés dans l'espace fonctionnel virtuel, à l'aide de comparaisons du type valeurs réelles-valeurs de consigne, dans le cadre du contrôle de qualité.

8. Procédé selon l'une des revendications précédentes, **caractérisé en ce qu'**on égalise les données relevées par le dispositif de contrôle (50) dans l'espace réel avec les données associées des modes opératoires, des trajectoires de référence et/ou des points de référence déterminées dans l'espace fonctionnel virtuel, et **en ce que** des écarts et/ou des grandeurs d'erreur déterminés sont corrigés, compensés et/ou optimisés.

9. Procédé selon l'une des revendications précédentes, **caractérisé en ce que** l'égalisation entre les espaces fonctionnels réel et virtuel s'effectue à l'aide de points de référence, de structures marquantes ou de nuages de points (triangulation laser 2D).

10. Système adapté à la mise en oeuvre du procédé selon l'une des revendications 1 à 9, comprenant un dispositif de contrôle mobile, qui comporte une unité d'entraînement, au moins un capteur de contrôle, un appareil de commande (60) commandant le dispositif de contrôle et destiné à commander le dispositif de contrôle (50) pour exécuter au moins une mission de contrôle dans un espace fonctionnel réel associé au composant (10) et/ou à l'unité fonctionnelle (14, 15, 16, 17) par le dispositif de contrôle (50),
une interface sans fil (85) pour la réception d'ordres de contrôle agissant sur l'appareil de commande (60),
le système comprenant également des moyens pour assurer l'orientation du dispositif de contrôle (50) dans l'espace fonctionnel réel,
et comprenant un système de gestion (70), qui communique avec l'interface.

11. Système selon la revendication 10, **caractérisé par** un moyen de détection (23) pour détecter un composant (10) à contrôler, une unité fonctionnelle (14, 15, 16, 17) et/ou un produit complexe (20) recevant un composant (10) et/ou une unité fonctionnelle (14, 15, 16, 17), le moyen de détection (23) communiquant avec l'interface (85).

12. Système selon la revendication 10 ou la revendication 1, **caractérisé par** un module de correction destiné à l'égalisation des données relevées par le dispositif de contrôle (50) dans l'espace fonctionnel réel avec les données associées des modes opératoires, des trajectoires de référence et/ou des points de référence déterminés dans l'espace fonctionnel virtuel, et à l'adaptation dynamique de la position du dispositif de contrôle (50) dans l'espace fonctionnel réel.
